# EUROPEAN PATENT SPECIFICATION

(11) **EP 3 150 065 B1**
(45) Date of publication and mention of the grant of the patent: **21.04.2021**
(21) Application number: 15192617.7
(22) Date of filing: 02.11.2015
(51) Int. Cl.: A01M 7/00

(54) **SUSPENDED SPRAYER FOR A TRACTOR**
AUFHÄNGESPRITZVORRICHTUNG FÜR EINEN TRAKTOR
PULVERISATEUR SUSPENDU POUR UN TRACTEUR

(30) Priority: 29.09.2015 ES 201531067 U
(43) Date of publication of application: 05.04.2017
(73) Proprietor: EXEL INDUSTRIES, 51200 Epernay (FR)
(72) Inventor: GODIA RIBES, Jose Maria, 25110 Alpicat (Lleida) (ES)
(74) Representative: Ahner, Philippe

(56) References cited:
- EP-A1- 1 371 287
- DE-A1- 10 025 406

## Description

The present invention relates to the sector of accessories for agricultural vehicles, commonly called "tractors". More specifically, the present invention relates to a type of accessory consisting of a sprayer to be connected to the rear portion of the tractor and used to spray phytosanitary products or liquid fertiliser.

There are two types of sprayers for tractors. "Trailed sprayers" are situated, for use, on a wheeled trailer which is attached to the rear part of the tractor, while "suspended sprayers" are situated, for use, suspended in cantilever fashion on the connecting components on the rear part of the tractor, usually consisting of two lower arms and one upper connector. The present invention relates to a sprayer of this second type, namely the suspended type.

Suspended sprayers of the known type have a main tank that contains the substance to be sprayed, usually made of a plastic material such as polypropylene, and a chassis to support the said tank. The chassis is designed to be suspended from the tractor via the said connecting means, the said chassis having a tractor connecting device for this purpose. See e.g. document DE 100 25 406 A1 which discloses the preamble of claim 1.

In the present description, the side on which the connecting device is located is referred to as the tractor interface side. The said side is the side of the sprayer that is closest to the tractor.

The chassis also has a spraying device, which usually includes pumps and extensible spraying booms. In addition, in some cases, control and/or interface components (actuations, pressure controls, interface, etc.) are arranged on the chassis. The said components are exposed to open air, and tend to be covered with mud and/or dust, and therefore they are designed to withstand the said elements.

Being suspended, the sprayer exerts a couple of forces on the tractor, which can cause its front wheels to lose contact with the ground and even overturn it. For this reason, the current state of the art has developed sprayer designs with a low centre of gravity in order to minimise the risk of overturning. It is also known to place a tank on the front part of the tractor as a counterweight, to offset the couple created by the weight of the sprayer.

In addition, occupational health and safety regulations require that there be an auxiliary tank of approximately 10% the capacity of the main tank, intended to hold water for washing out / cleaning the main tank after use and thus preventing any harm to personnel due to the chemical substances sprayed. In the current state of the art, the said auxiliary tank is located in a low position on the lateral sides adjacent to the interface side. This arrangement towards the rear of the auxiliary tank's interface, on the lateral sides, increases the rotational couple on the tractor's axle.

Consequently, the couple caused by the suspended sprayer is a critical design element that limits the dimensioning of the quantity of litres that can be stored in the main tank and/or the length of the sprayer booms.

The aim of the present invention is to disclose means to permit to obtain an innovative solution to the dimensioning limitation problem caused by the aforesaid couple of forces.

In order to achieve the said aim, the present invention discloses an auxiliary dispersion tank on the said interface with the tractor. Thus, during use, the auxiliary tank is arranged between the tractor cab and the main tank.

One advantage of the said arrangement is that, since the auxiliary tank containing harmless water is situated between the cab of the tractor and the main tank, it is possible to bring the sprayer interface side closer to the driver's cab. According to the prior art, on the other hand, it was necessary to maintain a safe distance between the interface side and the cab, since the upper part of the interface side is occupied by a wall of the main tank, which may contain substances that are hazardous to human health.

By being able to move the interface side close to the cab, the couple of forces produced by the weight of the sprayer is reduced.

The present invention according to claim 1 discloses a suspended sprayer for a tractor having a tractor cab, comprising:
a) a main tank for the phytosanitary substance or fertiliser to be sprayed,
b) an auxiliary or rinsing tank for cleaning the main tank,
c) a tank support chassis, intended to be suspended from the tractor, which chassis comprises:
   i) a connecting device for suspending the sprayer from the tractor, arranged on an interface side with the tractor, and which, during use, remains close to the tractor,
   ii) a sprayer device for the substance contained in the phytosanitary substance tank for spraying,
   wherein the said auxiliary tank is situated on the said interface side with the tractor, said auxiliary tank being situated, during use, between the tractor cab and the main tank, and the auxiliary tank being mounted above the connecting device.

The present invention also provides for the auxiliary tank to be arranged above the connecting device. Since the tank is situated close to the cab, it does not need to be mounted low in order to maintain the low centre of gravity of the unit as a whole.

Advantageously, the centre of gravity of the auxiliary tank will be located, during use, in the same vertical line as the tractor support points on the connecting device. This embodiment is especially advantageous because the auxiliary tank does not exert an additional couple of forces on the connecting point. This is possible because the auxiliary tank does not contain hazardous substances and can be moved closer to the tractor cab.

The new placement of the auxiliary tank means that the weight of the sprayer that forms the subject of the present invention exerts a lesser couple on the tractor than that exerted by a sprayer of the state of the art with the same quantity of liquid. This means that, in order to match the couple exerted by a sprayer of the state of the art, the sprayer that forms the subject of the present invention must be heavier. Therefore, the sprayer that forms the subject of the present invention makes it possible to load a greater weight than the sprayers of the state of the art, without the need to add a counterweight on the front part of the tractor.

Compared with sprayers of the state of the art, this allows the liquid tank to be larger, or the sprayer booms to be longer, or a frontal counterweight to be smaller or even dispensed with entirely, among others. Ultimately, the sprayer that forms the subject of the present invention makes it possible to spray a larger area of cultivated field by comparison with a sprayer of the state of the art.

Preferably, at least one of the sides is fitted with a protective element that protects the control components of the device from mud.

Particularly advantageously, and in order to provide the operator in the cab with greater protection, the auxiliary tank may occupy the entire width of the interface side of the sprayer in an area above the said connecting device.

To allow a better understanding, by way of explanatory but non-limitative example, some drawings are attached of an embodiment of the suspended sprayer for a tractor that forms the subject of the present invention.
Figure 1 shows a schematic side elevation view of a tractor with a suspended sprayer according to the prior art.
Figure 2 shows a schematic side elevation view of a tractor with a suspended sprayer according to the present invention.
Figure 3 shows a side elevation view corresponding to a detail of the previous figure, with a sprayer resting on the ground (connecting or disconnecting phase).
Figure 4 shows a top plan view of a sprayer according to the present invention.

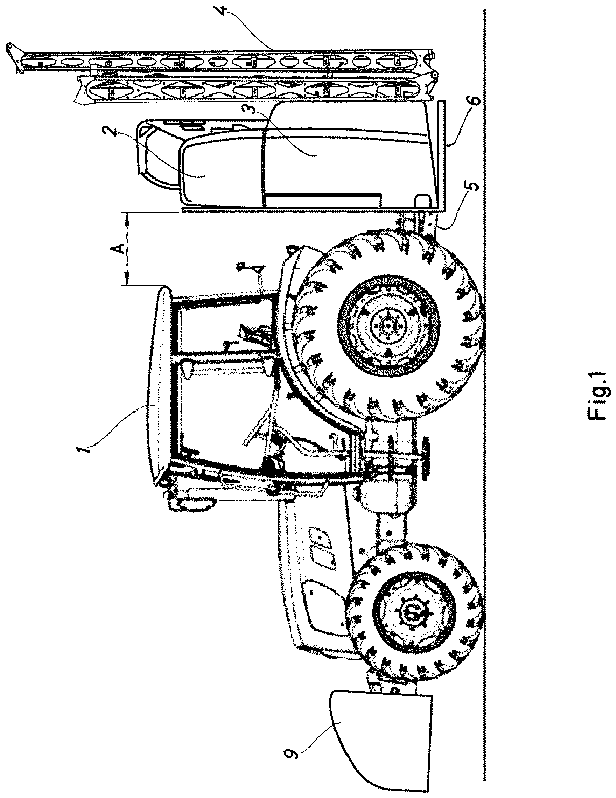

Figure 1 shows an example of a suspended sprayer according to the prior art. In the figure, a tractor -1- can be seen represented schematically with a sprayer that is suspended from a connecting device -5-. The side on which the sprayer connecting device is arranged is called the interface side. The sprayer has a chassis -6- on which the sprayer booms -4- are folded and a main tank -2-containing the phytosanitary substance or liquid fertiliser to be sprayed. On a side of the main tank -2-, in a low area close to the connecting connections, is situated the auxiliary tank -3- containing water for washing out or cleaning the main tank. Due to the weight of the sprayer (mainly determined by the quantity of fluid in the tanks), a front tank -9-has been arranged as a counterweight to prevent the front wheels of the tractor from losing contact with the ground.

As can be seen, if the centre of gravity is situated as close as possible to the connecting connections -5-, a safe distance A is also maintained between the tractor cab -1- and the main tank -2-. This distance is necessary not only to keep the centre of gravity low, but also to avoid any harm to the driver in the event of an accident causing a substance leakage from the tank.

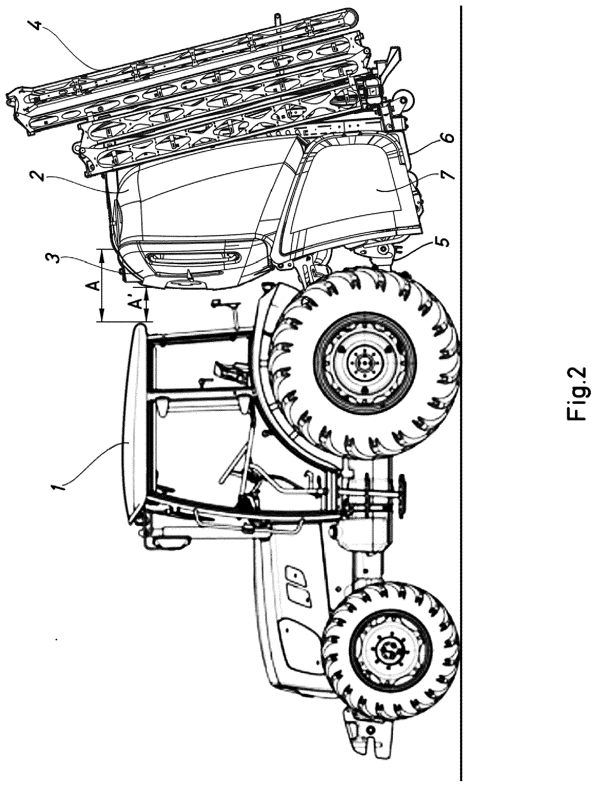

Figure 2 shows an example of a tractor -1- with a suspended sprayer according to the present invention. The unit is shown in the working position, that is, with the sprayer suspended. The sprayer consists of a chassis -6-which supports a main tank -2-, situated on the chassis -6-, a number of sprayer booms -4-, which are shown in the folded position on the rear part of the chassis -6-, and two protective elements -7- fixed to the sides of the said chassis -6-.

As can be seen, the main tank -2- is hidden with respect to the tractor cab -1-, because the auxiliary tank -3- is situated between the two. Therefore, it can be seen that it has been possible to reduce the distance A' between the sprayer and the tractor cab to the limit, given that there are no health hazards associated with a leak of liquid from the auxiliary tank -3-. The distance A between the main tank -2- and the cab can be maintained with respect to the prior art, and even reduced, since the auxiliary tank -3- acts as a protective shield. By being able to move the liquid closer to the cab, the couple of forces exerted by the weight of the sprayer is substantially reduced. As can be seen in Figure 2 , in this case the whole of the auxiliary tank -3- is above the connecting device -5-. In addition, in this case the centre of gravity of the auxiliary tank -3- is in the same vertical line as the support points of the sprayer on the lower arms of connection of the tractor -1-. On a side face can be seen one of the said protective elements -7- where the system control components are located, such as pumps, pressure regulators, handling elements, etc.). Therefore, although the sprayer -2- is closer to the dirt from the wheels of the tractor -1-, this is not a disadvantage because the protective element -7- acts as a mudguard, allowing protection of the said control components.

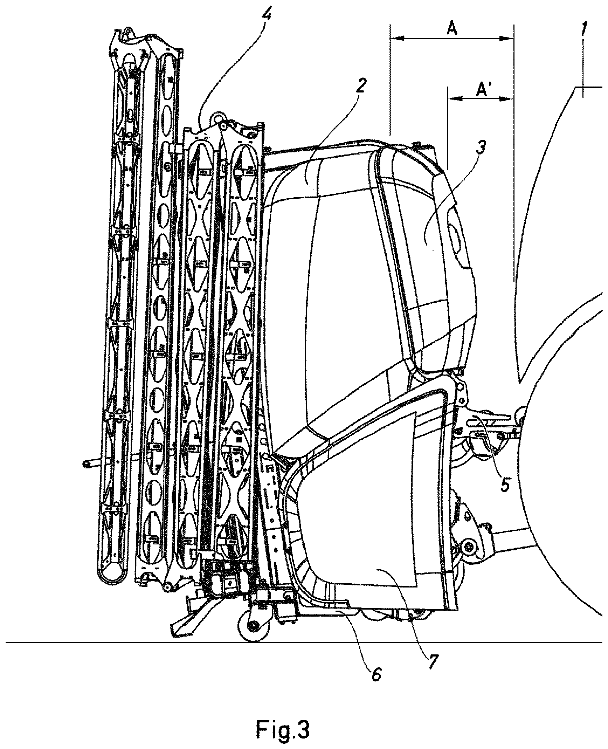

Figure 3 shows a detail of the sprayer, where the sprayer has been shown supported on the ground, prior to actuating the connecting arms of the tractor, which suspend the sprayer in order to transport it and/or to spray.

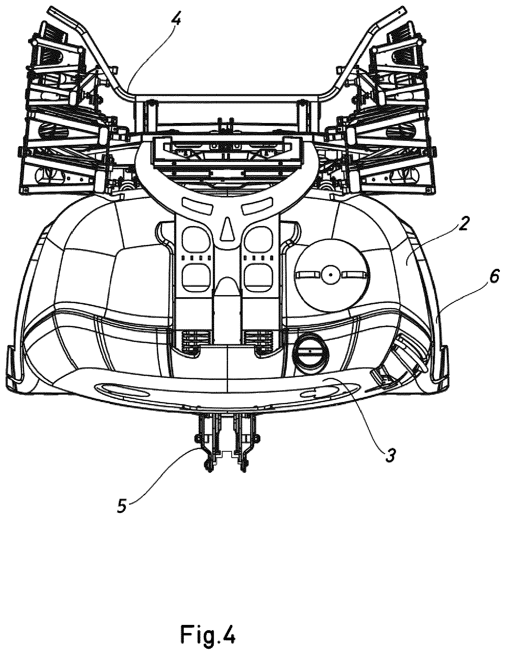

Figure 4 shows a top plan view of the sprayer of Figures 2 and 3. In this figure, it can be seen that the auxiliary tank occupies the entire width of the sprayer interface side in an area above the tractor connecting device -5-, placing it entirely between the main tank -2- and the cab of the tractor, with the interface side completely occupying the upper part corresponding with the cab and offering additional protection to the occupant of the cab.

While the present invention has been presented and described with reference to embodiments thereof, it shall be understood that these do not limit the invention, and there may be therefore multiple variations in terms of construction or other details that could be obvious to a person skilled in the art after interpreting the subject matter disclosed in the present description, claims, and drawings. Therefore, all variants and equivalents shall be included within the scope of the present invention if they can be considered to fall within the broadest scope of the following claims.

## Claims

1. Suspended sprayer for a tractor (1) having a tractor cab, comprising
1. a main tank (2) for the phytosanitary substance or fertiliser to be sprayed,
2. an auxiliary or rinsing tank (3) for cleaning the main tank,
3. a tank support chassis (6), intended to be suspended from the tractor, which chassis comprises:
i) a connecting device (5) for suspending the sprayer from the tractor, arranged on an interface side with the tractor, and which, during use, remains closer to the tractor,
ii) a sprayer device (4) for the substance contained in the tank for phytosanitary substance to be sprayed,
wherein the said auxiliary or rinsing tank (3) is situated on the said interface side with the tractor, **characterized in that** said auxiliary or rinsing tank (3) is situated, during use, between the tractor cab and the main tank, and **in that** the auxiliary or rinsing tank (3) is mounted above the connecting device (5).

2. Sprayer, according to claim 1, **characterized in that** the auxiliary or rinsing tank (3) is, during use aligned substantially vertically with the tractor support points of the connecting device (5), above said tractor support points of the connecting device (5).

3. Sprayer, according to claim 1 or 2, **characterised in that** the centre of gravity of the auxiliary or rinsing tank (3) is located, during use, in the same vertical line as the tractor support points of the connecting device.

4. Sprayer, according to any of claims 1 to 3, **characterised in that** at least one of the sides is fitted with a protective element (7) that protects the control components of the device from mud.

5. Sprayer, according to any of claims 1 to 4, **characterised in that** the auxiliary or rinsing tank (3) occupies the entire width of the interface side in an area above the said connecting device.

## Patentansprüche

1. Hängesprühgerät für einen Traktor (1) mit einer Traktorkabine, umfassend
1. einen Hauptbehälter (2) für das zu versprühende Pflanzenschutzmittel oder Düngemittel,
2. einen Hilfs- oder Spülbehälter (3) zum Reinigen des Hauptbehälters,
3. ein Behälter-Tragegestell (6), das dazu bestimmt ist, an dem Traktor aufgehängt zu werden, wobei das Gestell umfasst:
i) eine Verbindungsvorrichtung (5) zum Aufhängen des Spritzgeräts an dem Traktor, die an einer Schnittstellenseite mit dem Traktor angeordnet ist und die während des Einsatzes näher an dem Traktor bleibt,
ii) eine Sprühvorrichtung (4) für die in dem Behälter enthaltene Substanz für die zu versprühende Pflanzenschutzsubstanz,
wobei sich der Hilfs- oder Spülbehälter (3) an der genannten Schnittstellenseite zum Traktor befindet
**dadurch gekennzeichnet, dass**
der Hilfs- oder Spülbehälter (3) während des Gebrauchs zwischen der Traktorkabine und dem Hauptbehälter angeordnet ist, und dass der Hilfs- oder Spülbehälter (3) oberhalb der Verbindungsvorrichtung (5) angebracht ist

2. Sprühgerät nach Anspruch 1, **dadurch gekennzeichnet, dass** der Hilfs- oder Spülbehälter (3) während des Einsatzes im Wesentlichen senkrecht zu den Traktor-Tragpunkten der Verbindungsvorrichtung (5) ausgerichtet ist, oberhalb der Traktor-Tragpunkte der Verbindungsvorrichtung (5).

3. Sprühgerät nach Anspruch 1 oder 2, **dadurch gekennzeichnet, dass** der Schwerpunkt des Hilfs- oder Spülbehälters (3) im Einsatz in der gleichen Vertikalen liegt wie die Traktor-Tragpunkte der Verbindungsvorrichtung.

4. Sprühgerät nach einem der Ansprüche 1 bis 3, **dadurch gekennzeichnet, dass** mindestens eine der Seiten mit einem Schutzelement (7) versehen ist, das die Steuerungskomponenten des Geräts vor Schlamm schützt.

5. Sprühgerät nach einem der Ansprüche 1 bis 4, **dadurch gekennzeichnet, dass** der Hilfs- oder Spülbehälter (3) die gesamte Breite der Schnittstellenseite in einem Bereich oberhalb der genannten Verbindungsvorrichtung einnimmt.

## Revendications

1. Pulvérisateur suspendu pour un tracteur (1) ayant une cabine de tracteur, comprenant
1. un réservoir principal (2) pour la substance phytosanitaire ou l'engrais à pulvériser,
2. un réservoir auxiliaire ou de rinçage (3) pour nettoyer le réservoir principal,
3. un châssis de support de réservoir (6), destiné à être suspendu à partir du tracteur, lequel châssis comprend :
i) un dispositif de raccordement (5) pour suspendre le pulvérisateur au tracteur, agencé sur un côté d'interface avec le tracteur, et qui, pendant l'utilisation, reste plus près du tracteur,
ii) un dispositif pulvérisateur (4) pour la substance contenue dans le réservoir pour une substance phytosanitaire à pulvériser,
dans lequel ledit réservoir auxiliaire ou de rinçage (3) est situé sur ledit côté d'interface avec le tracteur, **caractérisé en ce que** ledit réservoir auxiliaire ou de rinçage (3) est situé, pendant l'utilisation, entre la cabine de tracteur et le réservoir principal, et **en ce que** le réservoir auxiliaire ou de rinçage (3) est monté au-dessus du dispositif de raccordement (5).

2. Pulvérisateur, selon la revendication 1, **caractérisé en ce que** le réservoir auxiliaire ou de rinçage (3) est, pendant l'utilisation, aligné sensiblement verticalement avec les points de support de tracteur du dispositif de raccordement (5), au-dessus desdits points de support de tracteur du dispositif de raccordement (5).

3. Pulvérisateur, selon la revendication 1 ou 2, **caractérisé en ce que** le centre de gravité du réservoir auxiliaire ou de rinçage (3) est situé, pendant l'utilisation, sur la même ligne verticale que les points de support de tracteur du dispositif de raccordement.

4. Pulvérisateur, selon l'une quelconque des revendications 1 à 3, **caractérisé en ce qu'**au moins l'un des côtés est équipé d'un élément protecteur (7) qui protège les composants de commande du dispositif de la boue.

5. Pulvérisateur, selon l'une quelconque des revendications 1 à 4, **caractérisé en ce que** le réservoir auxiliaire ou de rinçage (3) occupe toute la largeur du côté d'interface dans une zone au-dessus dudit dispositif de raccordement.
